Europäisches Patentamt

European Patent Office

Office européen des brevets

(19)

(11) Veröffentlichungsnummer: **0 169 331**
**B1**

(12) **EUROPÄISCHE PATENTSCHRIFT**

(45) Veröffentlichungstag der Patentschrift: **18.07.90**

(21) Anmeldenummer: **85106261.2**

(22) Anmeldetag: **22.05.85**

(51) Int. Cl.[5]: **H 02 B 1/14**

(54) **Sicherheitsanordnung an einem elektrischen System.**

(30) Priorität: **10.07.84 CH 3343/84**

(43) Veröffentlichungstag der Anmeldung:
**29.01.86 Patentblatt 86/05**

(45) Bekanntmachung des Hinweises auf die
Patenterteilung:
**18.07.90 Patentblatt 90/29**

(84) Benannte Vertragsstaaten:
**AT BE CH DE FR GB IT LI LU NL SE**

(56) Entgegenhaltungen:
**DE-A-3 015 259**
**FR-A-2 163 379**
**GB-A-2 111 631**

(73) Patentinhaber: **Karl Schweizer AG**
**Hammerstrasse 121**
**CH-4021 Basel (CH)**

(72) Erfinder: **Schmidlin, René**
**Eisenbahnweg 87**
**CH-4125 Riehen (CH)**

(74) Vertreter: **Troesch, Hans Alfred, Dr. Ing. et al**
**Walchestrasse 19**
**CH-8035 Zürich (CH)**

Courier Press, Leamington Spa, England.

EP 0 169 331 B1

**Beschreibung**

Die vorliegende Erfindung betrifft eine Sicherheitsanordnung an einem elektrischen System, wovon ein Teil selbst mit elektrischen Aggregaten versehen, entfernbar ist, wobei eine Schalteranordnung zur Trennung des Teils von elektrischer Energie und eine Verriegelungsanordnung zur Verriegelung des Teils am System gegen Entfernen vorgesehen ist, und wobei die Verriegelungsanordnung und die Schalteranordnung so wirkverbunden sind, dass die Verriegelungsanordnung nur für Einführen bzw. Entfernen des Teils entriegelt sein kann, wenn die Schalteranordnung abgeschaltet ist und die Schalteranordnung nur eingeschaltet sein kann, wenn die Verriegelung erstellt ist.

Es ist bekannt, dass, insbesondere bei elektrischen Systemen, die mit höheren elektrischen Leistungen arbeiten, Systemteile nur entfernt werden sollten — beispielsweise Einschübe in entsprechende Einschubschränke nur ausgezogen werden sollten — wenn vorgängig die Energiezufuhr zum Teilsystem abgeschaltet worden ist, um, beispielsweise beim Ausziehen, das Entstehen von Ueberschlagbogen zu vermeiden sowie aus Sicherheitsgründen.

Eine solche Sicherheitsanordnung obgenannter Art ist aus der DE-A-30 15 259 bekannt. Eine elektrische Schaltanordnung wirkt auf eine als Hebel ausgebildete Verriegelungsanordnung an einem elektrischen Einschub. In der Schaltposition der Schaltanordnung, in welche der Einschub an elektrische Energie aufgeschaltet wird, greift die Schaltanordnung nicht auf den Verriegelungshebel ein. Bei entferntem Einschub ist dieser Hebel dann in einer Position, die ein Einschieben des Einschubs verhindert, bei eingeschobenem Einschub verriegelt er ihn. Wird die Schalteranordnung in eine zweite Schaltposition umgelegt, in welche der Einschub von elektrischer Energie abgetrennt wird, so wird durch Eingriff eines schaltanordnungsseitigen Nockens auf den Verriegelungshebel letzterer zwingend entriegelt, so dass gleichzeitig mit der elektrischen Abschaltung auch die Entriegelung zwischen Einschub und Einschubschrank stattfindet.

Aehnlich ist es aus der GB-A-2 111 631 bekannt, eine ebenfalls als Drehschalter ausgebildete Schaltanordnung so mit einem Verriegelungsschieber an einem elektrischen Einschub zu koppeln, dass einerseits der ausgezogene Einschub bei einer Schaltstellung der Schaltanordnung, welche der Aufschaltung elektrischer Energie an den Einschub entspricht, nicht in den Schrank eingeschoben werden kann, andererseits, dass, bei eingeschobenem Einschub, in dieser Position der Schaltanordnung der Einschub nicht aus dem Schrank entfernt werden kann. Im Unterschied zur DE-A-30 15 259 wird hier die Bewegung des Drehschalters in eine lineare Bewegung eines Verriegelungsschiebers gewandelt, während bei der DE-A-30 15 259 die Drehbewegung der Schaltanordnung einen Verriegelungshebel kippt.

Bei beiden bekannten Anordnungen ist dabei zwingend Entriegeln der Verriegelungsanordnung und Abschalten der elektrischen Einschubspeisung gekoppelt. Soll somit der Einschub von elektrischer Energie abgetrennt werden, so wird auch die mechanische Verriegelung des Einschubes gelöst, ohne dass dies in jedem Fall nötig wäre, nämlich dann nicht, wenn der Einschub gar nicht entfernt werden soll. Dies ist insbesondere deshalb nachteilig, weil bei nicht notwendigerweise entriegeltem Einschub, mechanische Beanspruchungen den Einschub verschieben können, was einerseits, für das nachmalige Einschalten ein wieder in SOLL-Position-Bringen des Einschubes bedingt und anderseits zu unnötig häufigen mechanischen Beanspruchungen elektrischer Steckverbindungen zwischen Schrank und Einschub führt.

Die vorliegende Erfindung geht von der Aufgabe aus, eine Sicherheitsanordnung obgenannter Art so weiter zu bilden, dass die Schalteranordnung ein- und aus schaltbar ist, während die Verriegelungsanordnung verriegelt ist.

Dies wird durch den Wortlaut des kennzeichnenden Teils von Anspruch 1 erreicht.

Die obgenannte Wirkverbindung von Verriegelungsanordnung und Schalteranordnung wird auf einfache Art nach dem Wortlaut von Anspruch 2 realisiert.

Bedingt dadurch, dass das erste Betätigungsorgan nur in einer vorgegebenen Position wirksam wird, d.h. die Verriegelungsanordnung für eine Entriegelung freigibt bzw. die Entriegelung direkt ansteuert, können die übrigen Positionen dieses ersten Betätigungsorgans weiter gemäss Anspruch 3 ausgenützt werden.

Eine weitere konstruktiv äusserst einfache Lösung der genannten Sicherheitsanordnung ergibt das Vorgehen nach Anspruch 4.

Dadurch wird auf einfache Art und Weise die Drehbewegung des Drehbetätigungsorgans auf das linear bewegliche Verriegelungsorgan, als lineare Verschiebung, übertragen und die eigentliche Vornahme der Verriegelung kann, entfernt von der Stelle, an welcher das Drehbetätigungsorgan mechanisch angeordnet ist, vorgenommen werden.

Eine weitere, höchst einfache Aufbauvariante der erfindungsgemässen Sicherheitsanordnung ergibt sich nach dem Wortlaut von Anspruch 5.

Es ist bekannt, beispielsweise bei elektrischen Einschüben, auf deren Frontplatte, Leistungsschalter vorzusehen, die den Einschub an Spannung schalten und messerartig klappbare Schaltorgane umfassen. Es sind dies die Schaltanordnungen, die, vor Entfernen eines derartigen Teils bzw. Einschubes aus dem Gesamtsystem, spannungsabschaltend geöffnet werden müssen. Um nun die erfindungsgemässe Sicherheitsanordnung bei Vorsehen derartiger Schalteranordnungen auf einfache Art und Weise zu realisieren, wird vorgeschlagen, gemäss Anspruch 6 vorzugehen.

In einer bedienungskomfortableren Realisation der erfindungsgemässen Sicherheitsanordnung wird nun weiter vorgeschlagen, dass gemäss Anspruch 7 ein gemeinsames Betätigungsorgan für die Verriegelungsanordnungsbetätigung und die Schalteranordnungsbetätigung vorgesehen ist.

Vorzugsweise wird dabei das Betätigungsorgan als Drehbetätigungsorgan ausgebildet, womit die Möglichkeit gegeben ist, herkömmliche Dreh-Ein/ Aus-Schalter für die Energieaufschaltung, in ihrer Funktionsweise auch zur erfindungsgemässen Ansteuerung der Verriegelung zu verwenden.

Dies wird vorzugsweise gemäss Anspruch 9 realisiert.

Dadurch, dass gemäss Anspruch 10 das Betätigungsorgan unter Ueberwindung eines vorgegebenen Drehmomentes aus der ersten Position, weg von der zweiten, bewegbar ist, unter Freigabe der Schalteranordnung, wird erreicht, dass das Betätigungsorgan noch für weitere Steuerfunktionen einsetzbar ist, wie für Schaltfunktionen, ohne dass dabei die Schalteranordnung bzw. die Verriegelungsanordnung beeinträchtigt würden.

Des öftern werden nun, insbesondere bei elektrischen Einschüben in Einschubschränken, an den Einschüben sog. Leistungsautomaten vorgesehen, welche bei unzulässigen Betriebsbedingungen, beispielsweise Kurzschlüssen, schützartig ausschalten. Diese Automaten weisen üblicherweise pro Phase einen Betätigungshebel auf, die schwenkbar gelagert sind und bei den genannten unzulässigen Betriebsbedingungen automatisch von der manuell einzulegenden "Ein"-Stellung in die "Aus"-Stellung getrieben werden. Für eine Sicherheitsanordnung mit einem solchen Schwenkbetätigungsorgan für die Schalteranordnung, wie mit einem solchen Leistungsautomaten, wird nun vorgeschlagen, gemäss Anspruch 11 vorzugehen.

Dadurch, dass die Kupplungsanordnung gemäss Anspruch 12 eine Drehmomentenbegrenzung umfasst, wird erreicht:

a) dass ein vorgesehener Automat betriebsbedingungsbedingt in die "Aus"-Position abfallen kann, ohne das Drehbetätigungsorgan mitzubewegen und/oder

b) dass das Drehbetätigungsorgan, nach Einnahme der "Ein"-Stellung für weitere Steuer- bzw. Schaltfunktionen weitergedreht werden kann.

Auf einfache Art und Weise wird die Kupplung gemäss Anspruch 13 dadurch realisiert, dass sie einerseits als Nut-Stift-Kupplung ausgebildet ist, anderseits als Feder-Kugel-Rast-Kupplung.

Ist, wie im Fall des Vorsehens der genannten Automaten, die Schalteranordnung eine auch durch Betriebsbedingungen ausschaltbare Anordnung, so wird gemäss Anspruch 14 weiter vorgeschlagen, dass eine Federanordnung, vorzugsweise einstellbar, vorgesehen ist, zur Sicherstellung des Betriebsbedingungs-Ausschaltens. Dies insbesondere dann, wenn das betriebsbedingte Rückfallen der Schalteranordnung auch das Betätigungssorgan mittreiben soll.

Die erfindungsgemässe Sicherheitsanordnung eignet sich vorzüglich für die Verwendung für Einschubsicherungen bezüglich Einschubschränken.

Die Erfindung wird anschliessend beispielsweise anhand von Figuren erläutert.

Es zeigen:

Fig. 1 eine schematische Seitenansicht einer erfindungsgemässen Sicherheitsanordnung,

Fig. 2 eine Aufsicht auf die schematische Anordnung gemäss Fig. 1,

Fig. 3 eine Aufsicht auf eine bevorzugte Realisationsform der Anordnung gemäss den Fig. 1 und 2,

Fig. 4 eine weitere bevorzugte Ausführungsform der erfindungsgemässen Sicherheitsanordnung mit der Ansteuerung eines Leistungsautomaten,

Fig. 5a - c die Aufsicht auf die schematisch wiedergegebenen Steuerorgane der Anordnung gemäss Fig. 4 in drei, im Rahmen der Erfindung relevanten Positionen.

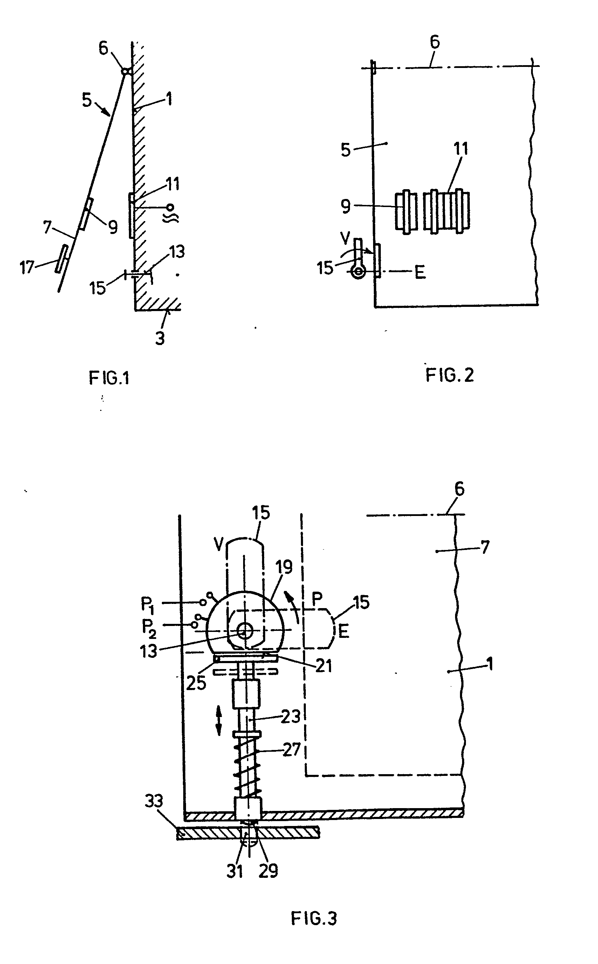

Gemäss Fig. 1 ist mit 1 die Frontplatte eines elektrischen Einschubes bezeichnet. 3 bezeichnet den Einschubboden. Auf der Frontplatte 1 des Einschubes ist ein generell mit 5 bezeichneter Leistungsschalter vorgesehen, mit einem messerartig um eine Achse 6 schwenkbar gelagerten Balken 7, an welchem Verbindungskontakte 9, üblicherweise für drei Netzphasen, vorgesehen sind. An der Frontplatte 1, in entsprechenden, nicht dargestellten Sockeln, sind Gegenkontakte 11 zu den Kontakten 9 vorgesehen. In der Frontplatte 1 ist, an einer Achse 13 drehbeweglich gelagert, ein Hebel 15 vorgesehen, der von aussen manuell betätigbar ist. Die Achse 13 wirkt in noch zu beschreibender Art und Weise auf eine Verriegelungsanordnung, in Abhängigkeit von der Position des Hebels 15.

Gemäss Fig. 2 ist der Hebel 15 in verriegelter position V dargestellt. Die Entriegelung der Verriegelungsanordnung erfolgt bei Umlegen des Hebels 15 in die in Fig. 2 strichpunktierte Winkellage E. Wie nun aus den Fig. 1 und 2 ersichtlich, liegt eine schematisch dargestellte Partie 17 des Balkens 7 bei geschlossenem Balken 7 und mithin Aufschalten der Spannung durch Schliessen der Kontakte 9, 11 in der Drehbahn des Hebels 15: Der Hebel 15 kann bei geschlossenem Schalterbalken 7 nicht in Entriegelungsposition entsprechend E gedreht werden. Entsprechend kann, wenn der Einschub bereits entfernt worden ist, letzterer nicht mit geschlossenem Schalterbalken 7 wieder eingeschoben werden, denn der in Entriegelungsposition entsprechend E geschwenkte Hebel 15 verhindert, dass der Schalterbalken 7 geschlossen werden kann. Somit ist der Handlungsablauf für Entfernen des Einschubes resp. generell des aus dem System zu entfernenden Teiles durch Oeffnen des Schalterbalkens 7, Umlegen des Hebels 15 in Entriegelungsposition E, Entfernen des Teils gegeben und analog kann der Teil bzw. der Einschub nur wieder eingeschoben werden, wenn der Schalterbalken 7 geöffnet ist, der Hebel 15 in Entriegelungsposition entsprechend E. Erst nach Einschieben des Einschubes und Umlegen des Hebels 15 in die Position V entsprechend der Verriegelungsposition, kann der Schalterbalken 7 wieder geschlossen werden.

In Fig. 3 ist eine bevorzugte Ausführungsvariante der in den Fig. 1 und 2 generell dargestellten Technik gezeigt.

Der in Fig. 3 ebenfalls schematisch dargestellte Schalterbalken 7 mit einer üblicherweise relativ voluminösen Kunststoffabdeckung, ist wiederum um die Achse 6 schwenkbar an der Einschubfrontplatte 1, an deren Aussenseite, gelagert. Der Hebel 15 ist an der Achse 13 an der Frontplatte schwenkbar gelagert, welch letztere auf der Frontplatteninnenseite eine Führungskurvenscheibe 19 trägt. Die Führungskurvenscheibe 19 ist grundsätzlich als Kreisscheibe ausgebildet, jedoch entlang einer Sehne 21 eingeformt. Auf der Frontplatteninnenseite ist ein Verriegelungsanker 23 linear beweglich gelagert und trägt endständig eine Kontaktplatte 25, in Eingriff mit der Scheibe 19. Der Verriegelungsanker 23 wird mittels einer Feder 27 in die obere Entriegelungsposition getrieben, das Ankerende 29, je nach Position des Ankers 23, in eine Verriegelungsöffnung 31, wie in einer Abstützung am Einschubschrank 33 eingetrieben resp. herausgezogen. Ist der Schaltbalken 7 geschlossen und liegt somit auf der Frontplatte 1 auf, so kann der Hebel 15 nicht in die in Analogie zu Fig. 2 dargestellte Entriegelungsposition E geschwenkt werden, in welcher die Sehne 21 der Scheibe 19 bündig mit der Platte 25 liegt. In dieser Kreisscheibenposition nimmt der Anker 23 seine oberste Position ein. In der mit V dargestellten Verriegelungsposition liegt die Kreisscheibe 19 mit ihrem Kreisbogen an der platte 25 an und der Anker 23 wird entsprechend der Abstandsdifferenz zwischen Sehne 21 und Achse 13 bzw. dem Radius des Scheiben-Kreisbogens nach unten getrieben. Auf diese Art und Weise wird äusserst einfach die Drehbewegung des Hebels 15 in eine lineare Verriegelungsbewegung des Ankers 23 umgesetzt. Wie ersichtlich, kann der Hebel 15 gegebenenfalls ohne weiteres in der mit P dargestellten Richtung aus der Verriegelungsposition V weitergedreht werden, wegen des Kreisbogen-Umfanges der Scheibe 19, ohne Wirkung auf den Verriegelungsanker 23. Somit kann der Schwenkhebel 15 zur Ansteuerung weiterer Funktionen, wie schematisch dargestellt, beispielsweise in Positionen $P_1$ und $P_2$ als elektrischer Schalter, eingesetzt werden.

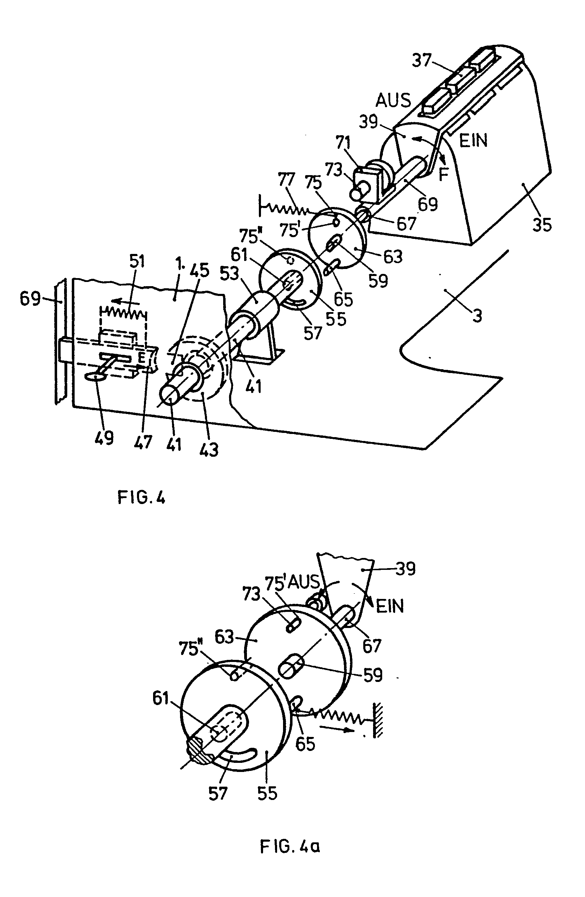

In Fig. 4 ist nun eine weitere bevorzugte Ausführungsform der Erfindung dargestellt. Als elektrischer Schalter für die Spannungsabschaltung, wie zu einem aus einem Einschubschrank entfernbaren Einschub, ist ein sog. Leistungsautomat 35 vorgesehen, der pro Phase einen Schalthebel 37 umfasst, von einer "Aus"-Stellung in eine "Ein"-Stellung schwenkbar. Der Automat 35 erlaubt, nebst dem manuellen Ein- und Ausschalten der Energiezuführung an den Einschub, die Ueberwachung von Betriebsbedingungen und schaltet automatisch, beispielsweise bei Ansteigen des Stromes aus Kurzschlussgründen, auf Position "Aus". Der Automat 35 weist einen an sich bekannten Betätigungsbügel 39 auf, mit welchem gleichzeitig die Hebel 37 betätigt werden können.

An der Frontplatte 1 des Einschubes eine Achse 41 durchgeführt, mit (nicht dargestelltem) Betätigungsknopf. Auf der Achse 41 reitet eine Verriegelungsscheibe 43 mit einer Nut 45.

Auf der Innenseite der Frontplatte 1 ist ein Verriegelungsschieber 47 linear geführt und kann mittels eines manuell betätigbaren Hebels 49 gegen die Rückstellkraft einer schematisch dargestellten Feder 51 aus Verriegelungsöffnungen 69, wie an den Seitenwänden des Einschubschrankes, bewegt werden, sofern die Nut 45 auf den Schieber 47 ausgerichtet ist. Die Achse 41 ist an einer Abstützung 53 am Boden 3 des Einschubes 1 gelagert und trägt endständig auf ihr fixiert, eine erste Kupplungsscheibe 55 mit einer Mitnehmernut 57. Auf einem Achsstummel 59, der bei zusammengestellter Anordnung in eine entsprechende Koaxialbohrung 61 in der Achse 41 einragt und dort abgestützt ist, reitet eine zweite Kupplungsscheibe 63 mit einem Mitnehmerbolzen 65, der in die Nut 57 in der ersten Kupplungsscheibe 55 einragt. Der Achsstummel 59, auch auf der Gegenseite der Kupplungsscheibe 63 durchragend, läuft frei in einer entsprechenden Bohrung 67 einer schalterseitigen Achse 69. Auf der Achse 69 reitet eine Halterung 71, in welche, achsparallel, eine Federkugelschraube eingeschraubt ist, mit einer gefederten, der zweiten Kupplungsscheibe 63 zugekehrten Rastkugel 73, ausgerichtet auf eine Bohrung bzw. Einnehmung 75 an der zweiten Kupplungsscheibe 63. Die Achse 69 ist mit dem Bügel 39 verbunden, in der Schwenkachse der Hebel 37 des Automaten 35. Eine schematisch dargestellte Feder 77 wirkt auf die zweite Kupplungsscheibe 63, mit Bezug auf die Schwenkbewegung der Hebel 37 in ausschaltender Richtung.

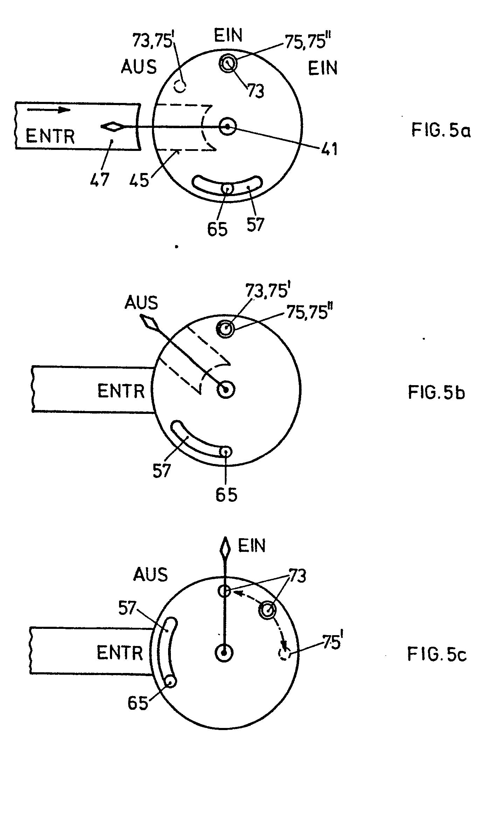

Die Funktionsweise dieser Anordnung wird nun auch im Zusammenhang mit den schematischen Figuren 5a bis 5c erläutert. Diese sind rein schematisch und zeigen die für die Bewegungskupplung zwischen Achse 41 und Bügel 39 wesentlichen Elemente in verschiedenen Positionen.

Ist mit Hilfe des nicht dargestellten Drehknopfes die Achse 41 in Entriegelungsposition gemäss Fig. 5a gedreht, so sind die Nut 45 und der Schieber aufeinander ausgerichtet, der Schieber 47 kann in der mit E dargestellten Richtung gegen die Kraft der Feder 51 verschoben werden, womit die Verriegelung aufgehoben wird. Dabei steht der Bolzen 65 im Mittelbereich der Nut 57, die Kugel 73 ist in die Einnehmung 75 eingerastet. Wird nun mit Hilfe des Drehknopfes die Achse 41 im Uhrzeigersinn, gemäss Fig. 5b in die Stellung "Aus" bewegt, so kann der Verriegelungsschieber 47 nicht mehr aus den Oeffnungen 69 geschoben werden, denn er steht an der nicht mit der Nut 45 versehenen Partie der Verriegelungsscheibe 43 an. Durch die Drehbewegung der Achse 41 wird die Nut 57 an der ersten Kupplungsscheibe 55 mitgedreht, bis der Bolzen 65 in der Stellung "Aus" gemäss Fig. 5b am Ende der Nut 57 ansteht. Dabei wurde die zweite Kupplungsscheibe 63 nicht bewegt und die Kugel 73 bleibt eingerastet in der Einnehmung 75 liegen. Wird nun mit dem besagten Drehknopf die Achse 41 weiter gedreht, so nimmt die Nut 57 den Bolzen 65 und damit die zweite Kupplungsscheibe 63 mit, wegen der in der Einnehmung 75 eingerasteten Kugel 73 wird dadurch auch die Achse 69 mitgedreht, der Bügel 39 geschwenkt und die Hebel 37 in "Ein"-Position geschwenkt. Dies entspricht der schematischen Darstellung von Fig. 5c, ausgezogen gezeichnet. Soll nun die Achse 41 wieder auf die Position "Aus" rückgedreht werden, so würde dies gemäss Fig. 5c mit Bezug auf die Hebel 37 wirkungslos bleiben. Die Feder 77 treibt jedoch die zweite Kupplungsscheibe 63 zurück und, über die eingerastete Kugel 73 in der Einnehmung 75, mithin auch die Hebel 37 aus der "Ein"- in die "Aus"-Position. Mit Hilfe der Feder 77 kann somit mit Hilfe des Drehknopfes an der Achse 41 der Automat 35 in "Ein"- oder "Aus"-Position gestellt werden, eine Entriegelung des Einschubes ist jedoch erst bei Rückführung in die Entriegelungsposition gemäss Fig. 5a möglich. Der automateigene Anschlag in der "Aus"-Position der Hebel 37 hält dabei die Achse 69 und via Kugeleinrastung auch die zweite Kupplungsscheibe 63 mit dem Bolzen 65 in der in Fig. 5a dargestellten Position.

Bei einem derartigen Automaten muss nun weiter sichergestellt sein, dass in eingeschalteter Position, betriebsbedingt, d.h. ohne Betätigung der Achse 41, der Automat bzw. seine Hebel 37 in die "Aus"-Position springen können. Wie aus Fig. 5c ersichtlich, ist das vorerst nicht ohne weiteres möglich, denn der Bolzen 65 steht in der Nut 57 an und verhindert ein Drehen im Gegenuhrzeigersinn der zweiten Kupplungsscheibe 63. Nun ist die Federung der Kugelrastanordnung von Kugel 73 in Einnehmung 75 so ausgelegt, dass die Kugel 73 beim betriebsbedingten Rückfallen des Automaten in Stellung "Aus", aus der Einnehmung 75 ausrastet, womit der Bügel 39 mit der Achse 69 und den Hebeln 37 in "Aus"-Position schwenken können, ohne dass sich dies auf die Drehlage von Achse 41 auswirken würde. In Fig 5c ist dies dargestellt, indem die Kugel 73 in die Position gemäss Fig. 5b rückspringt, jedoch ohne die Einnehmung 75. Ist es anderseits erwünscht, dass beim betriebsbedingten Rückfallen des Automaten 35 auch die Achse 41 und somit diesen Rückfall anzeigend, auch der Drehknopf rückgeschwenkt werden, so wird die Feder 77 so eingestellt, dass das Rückholmoment des Automaten 35 selbst, unterstützt durch das Federmoment ausreicht, um mit Bügel 39, Achse 69 den beiden Scheiben 63 und 55 auch die Achse 41 und damit den Drehknopf mit der Anzeige zu schwenken. Auch in diesem Fall bleibt das Vorsehen der Kugeleinrastung 73, 75 sinnvoll und zwar, wenn die Achse 41 nach Einschalten der "Ein"-Position bezüglich des Automaten 35 weitergedreht werden soll, wie zur Ansteuerung weiterer Schaltfunktionen. Dann wird durch manuelles Ueberwinden des Grenzmomentes, gegeben durch die Kugeleinrastung mittels des Drehknopfes an der Achse 41 die Bewegungsverbindung zwischen zweiter Kupplungsscheibe 63 und Achse 69 bzw. Bügel 39 gelöst.

Wird bei der Anordnung gemäss Fig. 4 von vornherein gewünscht, dass ein Abfallen des Automaten 35 bzw. seiner Hebel 37 von der "Ein"- in die "Aus"-Position sich via Kupplungsscheibe 63, Kupplungsscheibe 55, Achse 41 auf den Drehknopf auf besagter Achse überträgt, so wird die Kupplungsscheibe 63 starr mit der Achse 69 verbunden. Entweder übernimmt die Feder 77 das durch den Automaten 35 bei seinem betriebsbedingten Rückfallen zusätzlich zu überwindende Drehmoment, so dass sichergestellt ist, dass der Automat mit der geforderten Ansprechsensibilität ansprechen kann, oder die Kupplungsscheibe 63 wird mit einer durchgehenden Bohrung 75' versehen, durch die hindurch die Kugel 73 in eine Einnehmung 75'' an der Scheibe 55 einrastet. Dann übernimmt das Kupplungsmoment die Rastverbindung, die erst in Entriegelungsposition gemäss Fig. 5a gelöst wird. Im letztgenannten Fall unterstützt die Feder 77 das auslösende Moment vom Automaten 35.

Die Figuren 5a bis 5c bleiben gültig, unter Auslassung bzw. Aenderung der eingetragenen Rastverbindung 73, 75 in 73, 75', 75''.

Mit der beschriebenen Sicherheitsanordnung wird mithin eine optimale Sicherheit erlangt, dass ein unter Spannung stehender Teil eines elektrischen Systems nur bei ausgeschalteter Spannung entfernt werden kann bzw. wieder eingeführt werden kann und in einer bevorzugten Ausführungsvariante wird diese Sicherheitsanordnung optimal mit bestehenden Leistungsautomaten verbunden.

**Patentansprüche**

1. Sicherheitsanordnung an einem elektrischen System, wovon ein Teil (1, 3) selbst mit elektrischen Aggregaten versehen, entfernbar ist, wobei eine Schalteranordnung (9, 11, 35) zur Trennung des Teils (1, 3) von elektrischer Energie und eine Verriegelungsanordnung (23, 31, 47, 69) zur Verriegelung des Teils (1, 3) am System gegen Entfernen vorgesehen ist, und wobei die Verriegelungsanordnung und die Schalteranordnung so wirkverbunden sind, dass die Verriegelungsanordnung nur für Einführen bzw. Entfernen des Teils entriegelt sein kann, wenn die Schalteranordnung abgeschaltet ist und die Schalteranordnung nur eingeschaltet sein kann, wenn die Verriegelung erstellt ist, dadurch gekennzeichnet, dass die Verriegelungsanordnung eine Sperre (15, 47) aufweist, die Schalteranordnung (9, 11, 35) eine erste Schaltstellung, in der der Teil (1, 3) von der elektrischen Energie abgetrennt ist und eine zweite, in der der Teil (1, 3) an die elektrische Energie aufgeschaltet ist, und dass die Sperre (15, 47)

a) wenn die Verriegelungsanordnung (23, 31, 47, 69) entriegelt ist, das Einnehmen der zweiten Schaltstellung durch die Schalteranordnung (9, 11, 35) sperrt,

b) wenn die Schalteranordnung (9, 11, 35) in zweiter Schaltstellung ist, Entriegeln der Verriegelungsanordnung sperrt,

c) wenn die Verriegelungsanordnung (23, 31, 47, 69) verriegelt ist, die Schalteranordnung für Einnahme beider Schaltpositionen freigibt.

2. Sicherheitsanordnung nach Anspruch 1, dadurch gekennzeichnet, dass die Verriegelungsanordnung ein erstes Betätigungsorgan (15) umfasst, die Schalteranordnung ein zweites Betätigungsorgan (7), und dass das erste Betätigungsorgan in einer vorgegebenen Position (E) die Verriegelungsanordnung für eine Entriegelung mindestens freigibt, wobei das zweite Betätigungsorgan (7) in einer weiteren vorgegebenen Position die Schalteranordnung schliesst und in dieser weiteren vorgegebenen Position das Einnehmen der vorgegebenen Position durch das erste Betätigungsorgan (15) sperrt.

3. Sicherheitsanordnung nach Anspruch 2, dadurch gekennzeichnet, dass das erste Betätigungsorgan (15) in mindestens einer weiteren Position als elektrischer Schalter ($P_1$, $P_2$) wirkt.

4. Sicherheitsanordnung nach einem der Ansprüche 1 bis 3, dadurch gekennzeichnet, dass die Verriegelungsanordnung ein Drehbetätigungsorgan (13, 15) umfasst, mit einer Führungskurvenscheibe (19), die auf ein linear bewegliches Verriegelungsorgan (23) wirkt, wobei die Führungskurvenscheibe vorzugsweise eine entlang einer Sehne (21) geschnittene Kreisscheibe (19) ist.

5. Sicherheitsanordnung nach einem der Ansprüche 1 bis 4, dadurch gekennzeichnet, dass die Verriegelungsanordnung einen Betätigungshebel (15) umfasst, und die Schalteranordnung ein Betätigungsorgan (7), wobei sich Bewegungsbahnen vom Hebel (15) und Organ (7) kreuzen und im Kreuzungsbereich die Einschaltstellung des Organs (7) und die Entriegelungsstellung des Hebels (15) ist.

6. Sicherheitsanordnung nach einem der Ansprüche 1 bis 5, dadurch gekennzeichnet, dass die Schalteranordnung ein am Aeusseren des Teils um eine Achse klappbares Schaltorgan (7), wie eine Schaltmesseranordnung umfasst und die Verriegelungsanordnung am Aeussern des Teils (1) ein in den Klappbereich des Schaltorgans (7) ein- bzw. ausbewegliches Betätigungsorgan (15), vorzugsweise schwenkbar um eine Achse (13) senkrecht zur Klappachse (6), wobei das Schaltorgan (7) in eingeklappter Position die Schalteranordnung (9, 11) schliesst, das Betätigungsorgan (15) in den Klappbereich bewegt, die Verriegelung (23, 31) mindestens freigibt, und das Schaltorgan eingeklappt den Weg für das Betätigungsorgan (15) in den Klappbereich versperrt.

7. Sicherheitsanordnung nach einem der Ansprüche 1 bis 5, dadurch gekennzeichnet, dass ein gemeinsames Betätigungsorgan (41) für die Verriegelungsbetätigung und die Schalteranordnungsbetätigung vorgesehen ist.

8. Sicherheitsanordnung nach Anspruch 7, dadurch gekennzeichnet, dass das Betätigungsorgan (41) ein Drehbetätigungsorgan ist.

9. Sicherheitsanordnung nach einem der Ansprüche 7 oder 8, dadurch gekennzeichnet, dass das gemeinsame Betätigungsorgan (41) in einer ersten vorgegebenen Position die Schalteranordnung (35) schliesst, in einer folgenden, zweiten, öffnet und in einer folgenden, dritten, die Schalteranordnung offenhält, und die Verriegelungsanordnung (47) für eine Entriegelung freigibt.

10. Sicherheitsanordnung nach Anspruch 9, dadurch gekennzeichnet, dass das Betätigungsorgan (41) unter Ueberwindung eines vorgegebenen Drehmomentes (73, 75) aus der ersten Position (Ein), weg von der zweiten (Aus) bewegbar ist, unter Freigabe (75') der Schalteranordnung (35).

11. Sicherheitsanordnung nach einem der Ansprüche 7 bis 10, dadurch gekennzeichnet, dass die Schalteranordnung mittels eines Schwenkbetätigungsorgans (39) ein- bzw. ausschaltbar ist, z.B. ein Leistungsautomat (35) ist, und dass ein Drehbetätigungsorgan (41) vorgesehen ist und zwischen Drehbetätigungsorgan (41) und Schwenkbetätigungsorgan (39) eine Kupplungsanordnung (55, 63, 65, 57, 73, 75), wobei das Drehbetätigungsorgan (41) in einer vorgegebenen Position die Verriegelungsanordnung (47) freigibt, die Kupplungsanordnung (65, 57) in einer zweiten position des Drehbetätigungsorgans (41) eine Kopplung von letzterem (41) zum Schwenkbetätigungsorgan (39) erstellt und die Bewegung des Drehbetätigungsorgans (41) in eine dritte Position auf das Schwenkbetätigungsorgan (39) zum Einschalten der Schalteranordnung (35) überträgt.

12. Sicherheitsanordnung nach Anspruch 11, dadurch gekennzeichnet, dass die Kupplungsanordnung (55, 63, 65, 57, 73, 75) eine Drehmomentbegrenzung (73, 75) umfasst, deren Momentengrenze tiefer ist als das aufzubringende Drehmoment zur Betätigung des Drehbetätigungsorgangs ohne Schwenkbetätigungsorgan (39), derart, dass sich das Schwenkbetätigungsorgan (39) selbsttätig aus der durch das Drehbetätigungsorgan in dritter Position definierten Position (Ein) in die durch das Drehbetätigungsorgan (39) in zweiter Position definierten Position (Aus) rückbewegen kann, unter Ueberwindung der Momentengrenze und/oder, dass das Drehbetätigungsorgan (41) unter Ueberwindung der Momentengrenze über die dritte Position hinaus unter Entkopplung vom Schwenkbetätigungsorgan (39) beweglich ist.

13. Sicherheitsanordnung nach einem der Ansprüche 11 oder 12, dadurch gekennzeichnet, dass die Kupplung einerseits eine Nut-Stift-Kupplung ist und anderseits eine drehmomentbegrenzende Rastkupplung, wie eine Feder-Kugel-Rast-Kupplung (73, 75).

14. Sicherheitsanordnung nach einem der Ansprüche 7 bis 13, dadurch gekennzeichnet, dass ein Betätigungsorgan für die Schalteranordnung (35) in öffnender Richtung federvorgespannt ist.

15. Sicherheitsanordnung nach einem der Ansprüche 11 bis 14, dadurch gekennzeichnet, dass das Schwenkbetätigungsorgan in schalteröffnender Richtung federnd vorgespannt ist (77).

16. Verwendung der Sicherheitsanordnung nach einem der Ansprüche 1 bis 15 für die Sicherung von elektrischen Einschüben mit Bezug auf einen Einschubschrank.

**Revendications**

1. Dispositif de sécurité sur un système électrique dont une portion (1, 3), elle-même munie d'appareils électriques, peut être déposée, dispositif dans lequel sont prévus un dispositif de commutation (9, 11, 35) pour isoler la portion (1, 3) de l'énergie électrique, ainsi qu'un dispositif de verrouillage (23, 31, 47, 69) pour verrouiller la portion (1, 3) sur le système afin d'en empêcher la dépose, et dans lequel le dispositif de verrouillage et le dispositif de commutation sont liés fonctionnellement de façon que le dispositif de verrouillage ne puisse être déverrouillé, pour l'introduction ou la dépose de ladite portion, que si le dispositif de commutation est mis hors circuit et que le dispositif de commutation ne puisse être mis en circuit que si le verrouillage est réalisé, caractérisé en ce que le dispositif de verrouillage présente un pène (15, 47) et le dispositif de commutation (9, 11, 35) présente une première position de commutation dans laquelle la portion (1, 3) est isolée de l'énergie électrique et une seconde position de commutation dans laquelle la portion (1, 3) est mise en circuit sur l'énergie électrique, et en ce que le pène (15, 47)

a) si le dispositif de verrouillage (23, 31, 47, 69) est déverrouillé, interdit que le dispositif de commutation (9, 11, 35) prenne la seconde position de commutation,

b) si le dispositif de commutation (9, 11, 35) se trouve dans la seconde position de commutation, interdit le déverrouillage du dispositif de verrouillage,

c) si le dispositif de verrouillage (23, 31, 47, 69) est verrouillé, libère le dispositif de commutation pour qu'il puisse prendre les deux positions de commutation.

2. Dispositif de sécurité selon la revendication 1, caractérisé en ce que le dispositif de verrouillage comporte un premier organe de manoeuvre (15) et le dispositif de commutation, un second organe de manoeuvre (7), et en ce que le premier organe de manoeuvre, dans une position prescrite (E), libère au moins le dispositif de verrouillage pour un déverrouillage, étant précisé que, dans une autre position prescrite, le second organe de manoeuvre (7) ferme le dispositif de commutation et, dans cette a'utre position prescrite, interdit que le premier organe de manoeuvre (15) prenne la position prescrite.

3. Dispositif de sécurité selon la revendication 2, caractérisé en ce que le premier organe de manoeuvre (15) agit, dans au moins une autre position, comme commutateur électrique ($P_1$, $P_2$).

4. Dispositif de sécurité selon l'une des revendications 1 à 3, caractérisé en ce que le dispositif de verrouillage comporte un organe de manoeuvre tournant (13, 15) présentant une came de guidage (19) qui agit sur un organe de verrouillage (23) à déplacement linéaire, étant précisé que de préférence la came de guidage est une came circulaire (19) découpée le long d'une corde (21).

5. Dispositif de sécurité selon l'une des revendications 1 à 4, caractérisé en ce que le dispositif de verrouillage comporte un levier de manoeuvre (15) et le dispositif de commutation, un organe de manoeuvre (7), étant précisé que les trajectoires de déplacement du levier (15) et de l'organe (7) se croisent et que c'est dans la zone du croisement que se trouve la position de mise en circuit de l'organe (7) et la position de déverrouillage du levier (15).

6. Dispositif de sécurité selon l'une des revendications 1 à 5, caractérisé en ce que le dispositif de commutation comporte un organe de commutation (7) qui peut se rabattre autour d'un axe, à l'extérieur de ladite portion comme un dispositif à couteaux d'interrupteur, et le dispositif de verrouillage comporte, à l'extérieur de ladite portion (1), un organe de manoeuvre (15) qui peut se déplacer pour venir dans ou hors la zone de rabattement de l'organe de commutation (7), de préférence en pivotant autour d'un axe (13) perpendiculaire à l'axe de rabattement (6), étant précisé que, dans la position rabattue, l'organe de commutation (7) ferme le dispositif de commutation (9, 11), déplace l'organe de manoeuvre (15) dans la zone de rabattement, libère au moins le verrouillage (23, 31) et que l'organe de commutation, rabattu, obture le chemin qui permet à l'organe de manoeuvre (15) de venir dans la zone de rabattement.

7. Dispositif de sécurité selon l'une des revendications 1 à 5, caractérisé en ce qu'il est prévu un organe de manoeuvre commun (41) pour l'actionnement du dispositif de verrouillage et l'actionnement du dispositif de commutation.

8. Dispositif de sécurité selon la revendication 7, caractérisé en ce que l'organe de manoeuvre (41) est un organe de manoeuvre tournant.

9. Dispositif de sécurité selon l'une des revendications 7 ou 8, caractérisé en ce que, dans une première position prescrite, l'organe de manoeuvre commun (41) ferme le dispositif de commutation (35), dans une seconde position, qui vient à la suite l'ouvre, et, dans une troisième position, qui vient à la suite, maintient ouvert le dispositif de commutation et libère le dispositif de verrouillage (47) pour un déverrouillage.

10. Dispositif de sécurité selon la revendication 9, caractérisé en ce que l'organe de manoeuvre (41) est déplaçable de la première position (en circuit), à l'opposé de la seconde position (mise hors circuit), en surmontant un moment de rotation prescrit (73, 75) et en libérant (75') le dispositif de commutation (35).

11. Dispositif de sécurité selon l'une des revendications 7 à 10, caractérisé en ce que le dispositif de commutation peut être mis en circuit ou hors circuit au moyen d'un organe de manoeuvre pivotant (39), par exemple un automate de puissance (35), et en ce qu'il est prévu un organe de manoeuvre tournant (41) et, entre l'organe de manoeuvre tournant (41) et l'organe de manoeuvre pivotant (39), un dispositif d'accouplement (55, 63, 65, 57, 73, 75), étant précisé que, dans une position prescrite, l'organe de manoeuvre tournant (41) libère le dispositif de verrouillage (47), que, dans une seconde position de l'organe de manoeuvre tournant (41), le dispositif d'accouplement (65, 57) réalise un accouplement entre ce dernier (41) et l'organe de manoeuvre pivotant (39) et que le mouvement de l'organe de manoeuvre tournant (41) envers une troisième position est transmis à l'organe de manoeuvre pivotant (39) pour la mise en circuit du dispositif de commutation (35).

12. Dispositif de sécurité selon la revendication 11, caractérisé en ce que dispositif d'accouplement (55, 63, 65, 57, 73, 75) comporte un limiteur (73, 75) du moment de rotation dont le moment-limite est plus bas que le moment de rotation à exercer pour actionner l'organe de manoeuvre tournant sans l'organe de manoeuvre pivotant (39), de sorte que l'organe de manoeuvre pivotant (39) peut être rappelé automatiquement de la position (en circuit) qui est définie par la présence de l'organe de manoeuvre tournant dans la troisième position, à la position (hors circuit) qui est définie par la présence de l'organe de manoeuvre tournant (39) dans la seconde position, en surmontant le moment-limite et/ou que l'organe de manoeuvre tournant (41), en surmontant le moment-limite, peut aller au-delà de la troisième position en désaccouplant l'organe de manoeuvre pivotant (39).

13. Dispositif de sécurité selon l'une des revendications 11 ou 12, caractérisé en ce que l'accouplement est d'une part un accouplement encoche-cheville et d'autre part un accouplement par crantage à limitation du moment de rotation, tel qu'un accouplement par crantage ressort-bille (73, 75).

14. Dispositif de sécurité selon l'une des revendications 7 à 13, caractérisé en ce qu'un organe de manoeuvre pour le dispositif de commutation (35) est précontraint par ressort dans le sens de l'ouverture.

15. Dispositif de sécurité selon l'une des revendications 11 à 14, caractérisé en ce que l'organe de manoeuvre pivotant est précontraint par ressort (77) dans le sens de l'ouverture de l'organe de commutation.

16. Utilisation du dispositif de sécurité selon l'une des revendications 1 à 15 pour la sécurité detiroirs électriques dans une armoire à tiroirs.

**Claims**

1. Safety device for an electrical system, whereof one part (1, 3) itself provided with electrical assemblies, is removable wherein switch means (9, 11, 35) are provided for separating the part (1, 3) from the electric power supply, and locking means (23, 31, 47, 69) for locking the part (1, 3) into the system to prevent removal, and wherein the locking means and switch means are operatively coupled so that the locking means can only be unlocked for inserting or removing the part when the switch means are switched off, and the switch means can only be switched on when the locking is engaged, characterised in that the locking means comprises a catch (15, 47), the switch means (9, 11, 35) has a first switch position wherein the part (1, 3) is separated from the power supply, and a second position wherein the part (1, 3) is connected to the power supply, and in that the catch (15, 47)

   a) prevents the switch means (9, 11, 35) adopting the second switch position while the locking means (23, 31, 47, 69) is disengaged,

   b) prevents disengagement of the locking means when the switch means (9, 11, 35) is in the second switch position,

   c) frees the switch means to adopt both switch positions when the locking means (23, 31, 47, 69) are engaged.

2. Safety device as in Claim 1, characterised in that the locking means comprises a first operating member, (15), the switch means comprises a second operating member (7), and that the first operating member in a first predetermined position (E) frees at least the locking means for unlocking, and wherein, in a further predetermined position, the second operating member (7) closes the switch means, and prevents, in this further predetermined position, adoption of the predetermined position by the first operating member (15).

3. Safety device as in Claim 2, characterised in that in at least one further position the first operating member (15) acts as an electrical switch ($P_1$, $P_2$).

4. Safety device as in any of Claims 1-3, characterised in that the locking means includes a rotary operating member (13, 15) with a guide cam disc (19) which acts on a linearly mobile locking member (23), wherein the guide cam disc is preferably a circular disc (19) cut along a chord (21).

5. Safety device as in any of Claims 1-4 characterised in that the locking means comprises an operating lever (15) and the switch means an operating member (7), wherein the paths of lever (15) and member (7) intersect, and that the switch on position of the member (7) and the release position of the lever (15) are in the intersection zone.

6. Safety device as in any of Claims 1-5, characterised in that the switch means comprise a switch member (7) pivotable about a pivot axis at the exterior of the part, e.g. a switch-blade, and the locking means comprises on the exterior of the part (1) an operating member (15) movable into and out of the pivotal range of the switch member (7), preferably pivotable about an axis (13) perpendicular to the pivot axis (6) wherein the switch member (7) closes the switch means (9, 11) in pivoted down position, moves the operating member (15) into the pivotal range, at least frees the locking means (23, 31) and in that the switch member in pivoted down condition blocks the path for the operating member (15) into the pivotal range.

7. Safety device as in any of Claims 1-5, characterised in that a common operating member (41) is provided to actuate the locking means and the switch means.

8. Safety device as in Claim 7, characterised in that the operating member (41) is a rotary operating member.

9. Safety device as in Claim 7 or 8, characterised in that in a first predetermined position the common operating member (41) closes the switch means (35), opens in a following second position the switch means, and holds in a following, third position the switch means open and frees the locking means (47) for disengagement.

10. Safety device as in Claim 9, characterised in that on overcoming a predetermined torque (73, 75) the operating member (41) is movable out of the first position (on), away from the second position (off), while releasing (75') the switch means (35).

11. Safety device as in any of Claims 7-10, characterised in that the switch means is switchable on and off by a pivotal operating member (39), e.g. is an automatic cut-out (35), and in that a rotary operating member (41) is provided, and a coupling device (55, 63, 65, 57, 73, 75) between rotary operating member (41) and pivotal operating member (39), wherein the rotary operating member (41) frees the locking means (47) in one predetermined position, the coupling device (65, 57) installs a coupling between the rotary operating member (41) and the pivotal operating member (39) in a second position of the rotary operating member (41) and transmits a movement of the rotary operating member (41) into a third position onto the pivotal operating member (39) to switch on the switch means (35).

12. Safety device as in Claim 11, characterised in that the coupling device (55, 63, 65, 57, 73, 75) includes a torque limiter (73, 75) whose torque limit is lower than the torque to be applied for operating the rotary operating member without the pivotal operating member (39) in such manner that the pivotal operating member (39) can automatically retract from the (on) position defined by the rotary operating member in its third position into the (off) position defined by the rotary operating member (39) in its second position, by overcoming the torque limit, and/or that by overcoming the torque limit the rotary operating member (41) can move beyond the third position, with decoupling from the pivotal operating member (39).

13. Safety device as in Claim 11 or 12, characterised in that the coupling is on the one hand a stud and groove coupling, and on the other hand a torque-limiting snap coupling such as a spring and ball catch coupling (73, 75).

14. Safety device as in any of Claims 7-13, characterised in that an operating member for the switch means (35) is spring-loaded in the opening direction.

15. Safety device as in any of Claims 11-14, characterised in that the pivotal operating member is spring-loaded in the switch-opening direction.

16. Use of the safety device as in any of Claims 1-15 for protecting electrical push-in trays relative to a rack.

FIG.1

FIG. 2

FIG.3

EP 0 169 331 B1

FIG. 4

FIG. 4a

2

FIG.5a

FIG.5b

FIG.5c